# EUROPÄISCHE PATENTSCHRIFT

(11) **EP 2 997 061 B1**
(45) Veröffentlichungstag und Bekanntmachung des Hinweises auf die Patenterteilung: **09.01.2019**
(21) Anmeldenummer: 14721903.4
(22) Anmeldetag: 08.05.2014
(51) Int. Cl.: C08G 18/00, C08G 59/40, C08G 59/68, C08G 18/10, C08G 18/20, C09D 175/04

(54) **ISOCYANAT-EPOXID-HYBRIDHARZE**
ISOCYANATE EPOXIDE HYBRID RESINS
RÉSINES HYBRIDES ISOCYANATE-ÉPOXYDE

(30) Priorität: 13.05.2013 EP 13167490
(43) Veröffentlichungstag der Anmeldung: 23.03.2016
(73) Patentinhaber: BASF SE, 67056 Ludwigshafen am Rhein (DE)
(72) Erfinder: PRISSOK, Frank, 49448 Lemförde (DE); KAMM, Andre, 49163 Bohmte (DE)
(74) Vertreter: BASF IP Association
(86) Internationale Anmeldenummer: PCT/EP2014/059424
(87) Internationale Veröffentlichungsnummer: WO 2014/184082

(56) Entgegenhaltungen:
- EP-A2- 0 435 060
- DE-A1- 2 601 927
- US-A1- 2010 237 292
- US-A1- 2012 245 252

## Beschreibung

Die vorliegende Erfindung betrifft ein Verfahren zur Herstellung mindestens eines Harzes umfassend das Mischen mindestens eines Polyisocyanats mit mindestens einem Polyepoxid, wobei die Umsetzung in Gegenwart eines Katalysatorsystems auf der Basis mindestens einer metallfreien Lewisbase mit mindestens einem Stickstoffatom stattfindet, sowie Harze erhältlich nach einem erfindungsgemäßen Verfahren, und die Verwendung eines Harzes erhältlich nach einem erfindungsgemäßen Verfahren oder eines erfindungsgemäßen Harzes zur Herstellung von Dichtungen, zur Herstellung von Bauteilen für Rotorblätter, Bootsrümpfe oder Karosserieteilen oder für Beschichtungen.

Harzsysteme auf der Basis von Isocyanaten sind seit langem bekannt und werden in der Technik oft eingesetzt. Ein großer Nachteil dieser Harzsysteme auf der Basis von Isocyanaten gegenüber Epoxid- bzw. Polyesterharze ist die Tatsache, dass die Verarbeitungszeit von bekannten Polyurethansystemen bei maximal etwa 45 Minuten liegt und damit für die Füllung großflächiger Bauteile zu kurz ist. Selbst ohne oder mit üblicherweise in Polyurethansystemen verwendeten Katalysatorsystemen, insbesondere Quecksilberkatalysatoren, wie sie beispielsweise in WO 2011/095440 A1 offenbart werden, werden keine ausreichende Verarbeitungszeiten für solche Anwendungen erreicht.

Insbesondere bei Gießsystemen muss ein Harzsystem zunächst das Ausbringen in eine oft geometrisch anspruchsvolle Form in möglichst niederviskosem Zustand erlauben, anschließend soll das System aber schnell aushärten, damit eine Entformung oder eine baldige Benutzbarkeit gegeben ist. Diese Eigenschaft wird bei Gießsystemen mit der so genannten 'offenen Zeit', der Zeit in der eine Verarbeitung nach dem Vermischen noch möglich ist, der 'Entformzeit', nach der ein Formteil einer Form entnommen werden kann, und der so genannten 'Abbindezeit', der Zeit nach der das System durchreagiert ist, beschrieben. Diese Zeiten zu optimieren, stellt hohe Anforderungen an das eingesetzte Katalysatorsystem.

Eine Reihe von Patenten beschäftigte sich mit der Herstellung, Verarbeitung und Nutzung von Kombinationen aus Isocyanaten und Epoxiden. Der Einsatz dieser Stoffklasse ist für technische Anwendungen schwierig, da einfache Mischungen von Isocyanaten und Epoxiden auch bei erhöhten Temperaturen kaum zur Reaktion zu bringen sind. Aus der Literatur ist bekannt, dass sich bei höheren Temperaturen, insbesondere bei Temperaturen über 120 °C, nach längerer Zeit Oxazolidone bilden können. Eine Konkurrenzreaktion ist die Bildung von Polyisocyanuraten (PIR) aus den Isocyanaten.

US 2012/245252 A1 offenbart Zusammensetzungen für Pulverbeschichtungen, die Epoxyverbindungen, hergestellt aus MDI und aliphatischen bzw. aromatischen Diepoxiden in der Gegenwart von 1,8-Diazabicyclo(5,4,0)-undec-7-en (DBU), enthalten. Die genannte Herstellung erfolgt in zwei Umsetzungsschritten, wobei insbesondere in den Beispielen offenbart wird, dass bei Temperaturen ab 145 °C Adukte gebildet werden, die Oxazolidinringe enthalten.

US 2010/237292 A1 offenbart ein Verfahren zur Herstellung eines Harzes umfassend das Mischen mindestens eines Polyisocyanats mit mindestens einem Polyepoxid, wobei das Mischen in Gegenwart von DBU als Katalysator stattfindet. Das resultierende isocyanatmodifizierte Polyepoxidharz wird für Beschichtungen verwendet, als Polyepoxidverbindung kann der Diglycidylether von Bisphenol A oder ein epoxifunktionelles Novolakharz eingesetzt werden. Als Polyisocyanat werden MDI und TDI eingesetzt. Eine Abgrenzung von der D1 wäre beispielsweise über die erfindungsgemäß besonders geeigneten Mengen der Einsatzstoffe möglich.

EP 0 435 060 A2 offenbart Kunststoffformteile mit guten mechanischen Eigenschaften aus ausgehärteten Epoxidisocyanatreaktionsharzen, die durch Umsetzen von MDI mit dem Diglycidylether von Bisphenol A unter katalytischer Wirkung eines tertiären Amins hergestellt werden. Auch gegenüber der D2 könnte eine Abgrenzung erfolgen, indem die bevorzugt eingesetzten Mengen, die zu dem erfindungsgemäßen Effekt führen, in die Patentansprüche aufgenommen werden. Dies würde auch der Klarheitsbeanstandung der Recherchenbehörde Rechnung tragen.

DE 26 01 927 A1 (D3) betrifft allgemein schäumbare Gemische, die ein Polyisocyanat, ein modifiziertes Polyisocyanat, ein Polyepoxid und die Bläh- oder Treibmittel enthalten.

So beschreibt US 4,699,931 ein Verfahren zur Herstellung von Oxazolidon modifizierten Polyisocyanurat Schaumstoffen, bei denen Polyepoxide und Polyisocyanate mit aminischen PIR-Katalysatoren und Treibmitteln zur Reaktion gebracht werden, um entsprechende Schaumstoffe zu erzeugen. Dabei offenbart US 4,699,931, dass die Reaktion äußerst schnell abläuft, beispielsweise mit einer Startzeit von weniger als 20 Sekunden.

EP 0 130 454 A2 offenbart ein Verfahren zur Herstellung von kompakten Reaktionsharzen auf Basis von Isocyanaten und Epoxiden. Ferner lehrt EP 0 130 454 A2, dass der Einsatz von Aminkatalysatoren bereits bei niedrigen Temperaturen zu kurzen Topfzeiten führt. Die in EP 0 130 454 A2 offenbarten Harzsysteme besitzen den Nachteil, dass diese bei hohen Temperaturen gehärtet werden müssen.

DE 36 00 764 A1 beschreibt den Einsatz von tertiären oder quaternären Ammoniumsalzen als Katalysatoren, um Systeme mit langer offener Zeit zu erhalten. Nachteilig bei dem in DE 36 00 764 A1 offenbarten Verfahren ist, dass die Härtung bei hohen Temperaturen erfolgt. Ebenso offenbart DE 36 00 764 A1, dass durch tertiäre Amine nur eine offene Zeit von kleiner 20 Minuten erreicht werden kann. Diese Zeiten bzw. Verarbeitungsbedingungen sind für größere Bauteile und großtechnische Anwendungen nicht ausreichend.

Ausgehend vom Stand der Technik lag damit eine der vorliegenden Erfindung zugrunde liegende Aufgabe darin, Verfahren zur Herstellung von Harzen auf Basis von Isocyanaten und Epoxiden bereitzustellen, die für technische Anwendungen geeignet sind, bzw. geeignete Harzsysteme. Dabei sollte die Verarbeitungszeit ausreichend lang sein, und die Harzsysteme gleichzeitig bei geeigneten Bedingungen rasch und gut aushärten. Die Reaktionsbedingungen des Verfahrens sollten weiter eine technische Anwendung erlauben.

Erfindungsgemäß wird diese Aufgabe gelöst durch ein Verfahren zur Herstellung eines Harzes umfassend das Mischen mindestens eines Polyisocyanats mit mindestens einem Polyepoxid, wobei das Mischen in Gegenwart eines Katalysatorsystems auf der Basis mindestens einer metallfreien Lewisbase mit mindestens einem Stickstoffatom ausgewählt aus der Gruppe bestehend aus 1,8-Diazabicyclo-5,4,0-undec-7-en und Derivaten davon stattfindet,
wobei das Katalysatorsystem in einer Menge von 0,001 bis 1 Gew.-% bezogen auf die Summe des eingesetzten Polyisocyanats und Polyepoxids eingesetzt wird, und
wobei das Verfahren mindestens die folgenden Schritte umfasst:
(i) Mischen des mindestens einen Polyisocyanats, des mindestens einen Polyepoxids und des Katalysatorsystems unter Erhalt einer Mischung (I);
(ii) Ausbringen der Mischung (I) in eine Form oder an den gewünschten Reaktionsort durch Gießen, Sprühen oder Verteilen;
(iii) Erwärmen der Mischung (I) auf eine Temperatur im Bereich von 70 bis 100 °C bis zur Aushärtung der Mischung.

Überraschenderweise wurde nun gefunden, dass durch Einsatz eines Katalysatorsystems auf der Basis mindestens einer metallfreien Lewisbase mit mindestens einem Stickstoffatom ausgewählt aus der Gruppe bestehend aus 1,8-Diazabicyclo-5,4,0-undec-7-en und Derivaten davon die Reaktion beim Mischen von Isocyanaten und Epoxiden temperaturabhängig gesteuert werden kann. Somit ermöglicht das erfindungsgemäße Verfahren eine lange offene Zeit des Harzsystems und bei entsprechender Temperaturbehandlung ein schnelles Aushärten.

Mit dem erfindungsgemäßen Verfahren bzw. der erfindungsgemäßen Kombination des Katalysatorsystems mit den entsprechenden Polyisocyanaten und Polyepoxiden ist die offene Zeit des Harzsystems gut einstellbar, so dass die Komponenten gemischt werden können und dann zunächst eine niedrigviskose Mischung erhalten wird, die über lange Zeit verarbeitbar ist. Diese kann dann ausgebracht werden und eine Reaktion setzt erst bei einer geeigneten Temperaturbehandlung oder einer entsprechend großen Menge an Katalysator ein.

Das Katalysatorsystem wird erfindungsgemäß in einer Menge von 0,001 bis 1 Gew.-% bezogen auf die Summe des eingesetzten Polyisocyanats und Polyepoxids eingesetzt. Vorzugsweise wird das Katalysatorsystem in einer Menge von 0,005 bis 0,75 Gew.-% bezogen auf die Summe des eingesetzten Polyisocyanats und Polyepoxids eingesetzt, besonders bevorzugt in einer Menge von 0,01 bis 0,5 Gew.-% bezogen auf die Summe des eingesetzten Polyisocyanats und Polyepoxids.

Die Mischung (I) umfassend das mindestens eine Polyisocyanat, das mindestens eine Polyepoxid und das Katalysatorsystem ist erfindungsgemäß niedrigviskos und besitzt vorzugsweise bei einer Temperatur von 25 °C eine Gelzeit von größer 45 Minuten, insbesondere größer 60 Minuten, bevorzugt größer 90 Minuten, besonders bevorzugt größer 180 Minuten und ganz besonders bevorzugt größer 240 Minuten.

Dabei wird die Gelzeit im Rahmen der vorliegenden Erfindung so definiert, dass eine Mischung von 100 Gramm Polyisocyanat, Polyepoxid und Katalysator bei Raumtemperatur zu einer festen Masse ausreagieren. Die Gelzeit dieser Mischung wird mit einem SHYODU Gel Timer, Modell 100, bestimmt.

In einer bevorzugten Ausführungsform der Erfindung, ändert sich die Viskosität der Mischung (I) bei 25 °C in einem Zeitraum von 45 Minuten, insbesondere 60 Minuten, bevorzugt 90 Minuten, besonders bevorzugt 180 Minuten und ganz besonders bevorzugt 240 Minuten kaum, und das Material besitzt eine ausgezeichnete Fließfähigkeit. Dabei steigt in dieser bevorzugten Ausführungsform der Erfindung die Viskosität in diesem Zeitraum nicht mehr als 200 %, bevorzugt nicht mehr als 100 % und besonders bevorzugt nicht mehr als 50 % der initialen Viskosität an.

Die Mischung (I) kann neben dem mindestens einen Polyisocyanat, dem mindestens einen Polyepoxid und dem Katalysatorsystem weitere Komponenten enthalten, beispielsweise Lösungsmittel, Reaktivverdünner, Stabilisatoren, Entschäumer, Verdickungsmittel, Tixotropiermittel, Additive, Haftvermittler, Füllstoffe, Wasserfänger, Polyole oder Polyamine.

Gemäß einer bevorzugten Ausführungsform betrifft die vorliegende Erfindung demnach ein Verfahren zur Herstellung eines Harzes wie zuvor beschrieben, wobei die Mischung (I) bei einer Temperatur von 25 °C eine Gelzeit von größer 60 Minuten aufweist.

Die erhaltene Mischung (I) wird gemäß Schritt (ii) ausgebracht. Das Ausbringen kann im Rahmen der vorliegenden Erfindung auf jede geeignete Art erfolgen, insbesondere durch Gießen, Sprühen oder Verteilen. Geeignete Methoden sind dem Fachmann an sich bekannt.

Gemäß Schritt (iii) erfolgt dann eine Temperaturbehandlung. Erfindungsgemäß ist die Mischung des mindestens einen Polyisocyanats, des mindestens einen Polyepoxids und des Katalysatorsystems vorzugsweise bei einer Temperatur von 25 °C inreaktiv. Eine Aushärtung erfolgt erfindungsgemäß erst bei einer Erwärmung, vorzugsweise bei einer Erwärmung auf eine Temperatur von kleiner 100 °C, weiter bevorzugt bei einer Erwärmung auf eine Temperatur im Bereich von 70 bis 100 °C.

Demgemäß betrifft die vorliegende Erfindung gemäß einer weiteren Ausführungsform ein Verfahren zur Herstellung eines Harzes wie zuvor beschrieben, wobei die Umsetzung bei einer Temperatur von kleiner 100 °C startet.

Das Erwärmen erfolgt erfindungsgemäß bis zum Aushärten der Mischung. Dabei ist unter Aushärtung der Mischung ein Erreichen von mindestens 20 %, bevorzugt 50 % und besonders bevorzugt 75 % der finalen Härte zu verstehen. Ferner kann unter Aushärten auch der Zeitraum bis "klebfreiheit" verstanden werden.

Das Erwärmen kann auf jede dem Fachmann bekannte geeignete Art erfolgen. Vorzugsweise durch elektrisches Heizen, Öl oder Wasser, Beheizen der Form, Induktionsfelder, Warmluft oder IR-Strahlung auf die Harzoberfläche.

In dem erfindungsgemäßen Verfahren wird ein Katalysatorsystem auf der Basis mindestens einer metallfreien Lewisbase mit mindestens einem Stickstoffatom ausgewählt aus der Gruppe bestehend aus 1,8-Diazabicyclo-5,4,0-undec-7-en und Derivaten davon eingesetzt. Dabei wird erfindungsgemäß der Katalysator an sich nicht zur Reaktion gebracht.

Bei dem Katalysatorsystem handelt es sich vorzugsweise um ein metallfreies Katalysatorsystem, d.h. es wird kein metallhaltiger Katalysator eingesetzt. Demgemäß betrifft die vorliegende Erfindung gemäß einer weiteren Ausführungsform ein Verfahren zur Herstellung eines Harzes wie zuvor beschrieben, wobei das Katalysatorsystem ein metallfreies Katalysatorsystem ist.

Erfindungsgemäß wird das Katalysatorsystem vorzugsweise so ausgewählt, dass die Verarbeitungszeit des Harzsystems bei 25 °C auf länger als 45 Minuten, insbesondere länger als 60 Minuten, bevorzugt auf länger als 90 Minuten, besonders bevorzugt länger als 180 Minuten und ganz besonders bevorzugt länger als 240 Minuten eingestellt werden kann.

Erfindungsgemäß wird ein Katalysatorsystem auf der Basis mindestens einer metallfreien Lewisbase mit mindestens einem Stickstoffatom eingesetzt. Dabei handelt es sich im Rahmen der vorliegenden Erfindung mindestens um 1,8-Diazabicyclo-5,4,0-undec-7-en und Derivate davon.

Besonders vorteilhaft ist die metallfreie Lewisbase ein Derivat von 1,8-Diazabicyclo-5,4,0-undec-7-en, besonders bevorzugt ein blockiertes 1,8-Diazabicyclo-5,4,0-undec-7-en, weiter bevorzugt ein Phenol blockiertes 1,8-Diazabicyclo-5,4,0-undec-7-en. Beispielsweise ist die metallfreie Lewisbase ein Derivat von 1,8-Diazabicyclo-5,4,0-undec-7-en oder Mischungen von 1,8-Diazabicyclo-5,4,0-undec-7-en mit aciden Komponenten, wie z.B. Phenol oder Säuren. Solche Produkte werden unter verschiedenen Handelsnamen wie z.B. Polycat SA 1/10, Toyocat DB 30, Toyocat DB 41, Toyocat DB 42 oder Toyocat DB 60 vertrieben. Besonders bevorzugt wird 1,8-Diazabicyclo-5,4,0-undec-7-en oder ein Phenol blockiertes 1,8-Diazabicyclo-5,4,0-undec-7-en verwendet.

In einer weiteren Ausführungsform der Erfindung kann es vorteilhaft sein, neben dem erfindungsgemäßen 1,8-Diazacyclo-5,4,0-undec-7-en als Katalysator noch weitere tertiäre Amine zuzusetzen. Dabei liegt das erfindungsgemäße 1,8-Diazacyclo-5,4,0-undec-7-en im Überschuss vor. Bevorzugte Verhältnisse von 1,8-Diazacyclo-5,4,0-undec-7-en zu anderen tertiären Aminen liegen im Verhältnis von 51:49, bevorzugt 75:25, besonders bevorzugt 90:10, ganz besonders bevorzugt 95:5 und insbesondere 99:1.

Die im Rahmen der vorliegenden Erfindung eingesetzten Polyepoxide können beliebige Verbindungen sein. Dabei enthalten die Polyepoxide mindestens zwei oder mehr Epoxidgruppen. Geeignete Polyepoxide sind dem Fachmann aus der Literatur wie z.B. Handbook of Epoxy Resins (H. Lee, K. Neville, McGraw-Hill Book Company) bekannt. Als Beispiele für monofunktionelle Epoxide seien z.B. Isopropylglycidether, tert.-Butylglycidether oder Ethylhexylgylcidether genannt. Als besonders geeignet haben sich für das erfindungsgemäße Verfahren Epoxide auf Basis von Epichlorhydrin und Bisphenol-A , Bisphenol-F, Bisphenol-K, Bisphenol S, Biphenol, Hydrochinone, Resorcinol, Tetrabrombisphenol A, Phenol-Formaldehyd Novolac Harze, Polyglycidether, Diglycidylester von z.B. Phthalsäuren oder Terephthalsäuren und Derivate davon und aliphatische Di- oder Tri-Epoxide und Mischungen daraus erwiesen. Solche Produkte werden von verschiedenen Herstellern unter den Handelsnamen Araldite©, D.E.R.©, Epilox© oder Baxxores© vertrieben. Besonders bevorzugt sind Bisphenol-A Epoxide und Derivate davon, insbesondere Glycidylether, wie beispielsweise Diglycidylether-Bisphenol-A, und Mischungen mit den oben genannten aliphatischen Di- oder Triepoxiden.

Demgemäß betrifft die vorliegende Erfindung gemäß einer weiteren Ausführungsform ein Verfahren zur Herstellung eines Harzes wie zuvor beschrieben, wobei das mindestens eine Polyepoxid ausgewählt ist aus der Gruppe bestehend aus Bisphenol-A-Epoxiden, Bisphenol-F-Epoxiden, Derivaten davon, aliphatischen Di- oder Tri-Epoxiden und Mischungen aus zwei oder mehr davon.

Erfindungsgemäß können auch Mischungen verschiedener Polyepoxide eingesetzt werden.

Demgemäß betrifft die vorliegende Erfindung gemäß einer weiteren Ausführungsform ein Verfahren zur Herstellung eines Harzes wie zuvor beschrieben, wobei bei der Umsetzung des mindestens einen Polyisocyanats mit dem mindestens einen Polyepoxid keine gegenüber Isocyanaten reaktiven Verbindungen außer Epoxiden eingesetzt werden.

Erfindungsgemäß kann das Polyepoxid in reiner Form oder in Form einer Zusammensetzung enthaltend das Polyepoxid und mindestens ein Verdünner eingesetzt werden. Geeignete dem Fachmann bekannte Verdünner sind z.B. inreaktive Lösungsmittel wie Ethylacetat, Methylethylketon, Kohlenwasserstoffe, Reaktivverdünner wie lineare, niederviskose Di- oder Triepoxide, Weichmacher wie Phthalate oder Zitronensäureester. Ferner sollen als Verdünner im Rahmen dieser Erfindung auch niederviskose Reaktivverdünner wie z.B. Monoglycidether oder Diglycidether auf Basis von kurzkettigen Di- oder Triolen, wie z.B. 1,4-Butandiol, 1,6-Hexandiol, Trimethylolpropan, 1,4 Cyclohexandimethanol oder Polyoxypropylenglycol verstanden werden.

Als Polyisocyanate können aliphatische, cycloaliphatische, araliphatische und/oder aromatische Diisocyanate eingesetzt werden. Im Einzelnen seien beispielhaft die folgenden aromatischen Isocyanate genannt: 2,4-Toluylen-diisocyanat, Gemische aus 2,4- und 2,6-Toluylen-diisocyanat, 4,4'-, 2,4'- und/oder 2,2'-Diphenylmethan-diisocyanat (MDI), Gemische aus 2,4'- und 4,4'-Diphenylmethan-diisocyanat, urethanmodifizierte flüssige 4,4'- und/oder 2,4-Diphenylmethan-diisocyanate, 4,4'-Diisocyanato-diphenylethan, die Mischungen aus monomeren Methandiphenyldiisocyanaten und höherkernigen Homologen des Methandiphenyldiisocyanats (Polymer-MDI), (1,2) und 1,5-Naphthylen-diisocyanat.

Als aliphatische Diisocyanate werden übliche aliphatische und/oder cycloaliphatische Diisocyanate eingesetzt, beispielsweise Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, 1-Isocyanato-3,3,5-trimethyl-5-isocyanatomethyl-cyclohexan (Isophoron_diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat, 4,4'-, 2,4'- und/oder 2,2'-Dicyclohexylmethan-diisocyanat.

Polyisocyanatprepolymere sind erhältlich, indem vorstehend beschriebene Polyisocyanate im Überschuss, beispielsweise bei Temperaturen von 30 bis 100 °C, bevorzugt bei etwa 80 °C, mit Polyolen zum Prepolymer umgesetzt werden. Vorzugsweise wird zur Herstellung der erfindungsgemäßen Prepolymere Polyisocyanate und handelsüblichen Polyolen auf Basis von Polyestern, beispielsweise ausgehend von Adipinsäure, oder Polyethern, beispielsweise ausgehend von Ethylenoxid und/oder Propylenoxid, verwendet.

Polyole sind dem Fachmann bekannt und beispielsweise beschrieben im "Kunststoffhandbuch, Band 7, Polyurethane", Carl Hanser Verlag, 3. Auflage 1993, Kapitel 3.1. Vorzugsweise werden dabei als Polyole die unter b) beschriebenen polymeren Verbindungen mit gegenüber Isocyanate reaktiven Wasserstoffatomen eingesetzt. Besonders bevorzugt werden als Polyole Polyetherole eingesetzt.

Gegebenenfalls werden den genannten Polyolen bei der Herstellung der Isocyanatprepolymere übliche Kettenverlängerer oder Vernetzungsmittel zugegeben. Solche Substanzen sind im Folgenden unter c) beschrieben. Besonders bevorzugt wird als Kettenverlängerer 1,4-Butandiol, Dipropylenglycol und/oder Tripropylenglycol eingesetzt. Vorzugsweise wird dabei das Verhältnis von organischen Polyisocyanaten zu Polyolen und Kettenverlängerern so gewählt, dass das Isocyanatprepolymer einen NCO-Gehalt von 2 bis 30 %, bevorzugt von 6 bis 28 %, besonders bevorzugt von 10 bis 24 % aufweist.

Besonders bevorzugte Polyisocyanate sind ausgewählt aus der Gruppe bestehend aus MDI, Polymer-MDI und TDI, sowie deren Derivate oder Prepolymere dieser Polyisocyanate.

Demgemäß betrifft die vorliegende Erfindung gemäß einer weiteren Ausführungsform ein Verfahren zur Herstellung eines Harzes wie zuvor beschrieben, wobei das mindestens eine Polyisocyanat ausgewählt ist aus der Gruppe bestehend aus aromatischen, araliphatischen und aliphatischen Polyisocyanaten.

Erfindungsgemäß kann das Polyisocyanat in reiner Form oder in Form einer Zusammensetzung z.B. einem Isocyanatprepolymer verwendet werden. In einer weiteren Ausführungsform kann eine Mischung enthaltend Polyisocyanat und mindestens ein Lösungsmittel eingesetzt werden. Geeignete Lösungsmittel sind dem Fachmann bekannt.

Die Mischungen von Polyisocyanaten und Polyepoxiden sollten vorzugweise aus einem Äquivalenzverhältnis von Polyisocyanat zu Polyepoxid von Polyisocyanaten, bevorzugt 0,25:1 bis 5000:1, besonders bevorzugt 0,35:1 bis 500:1, ganz besonders bevorzugt 0,5:1 bis 100:1 und insbesondere 0,75:1 bis 50:1, bestehen.

Erfindungsgemäß können übliche Hilfsstoffe hinzugefügt werden. Genannt seien beispielsweise oberflächenaktive Substanzen, Füllstoffe, weitere Flammschutzmittel, Keimbildungsmittel, Oxidationsstabilisatoren, Gleit- und Entformungshilfen, Farbstoffe und Pigmente, gegebenenfalls Stabilisatoren, z.B. gegen Hydrolyse, Licht, Hitze oder Verfärbung, anorganische und/oder organische Füllstoffe, Verstärkungsmittel und Weichmacher. Geeignete Hilfs- und Zusatzstoffe können beispielsweise dem Kunststoffhandbuch, Band VII, herausgegeben von Vieweg und Höchtlen, Carl Hanser Verlag, München 1966 (S. 103-113) entnommen werden.

Überraschenderweise wurde gefunden, dass eine feuchte Lagerung des ausgehärteten Harzes zu einer weiteren Verbesserung der mechanischen Eigenschaften führt. Dieser Effekt ist besonders bei Äquivalenzverhältnissen von Polyisocyanaten zu Polyepoxiden von 0,25:1 bis 4:1, bevorzugt 0,25:1 bis 3:1, besonders bevorzugt 0,25:1 bis 2:1 zu beobachten. Dieser Effekt kann bereits bei relativ kurzen Lagerungen in einer Wasserdampfatmosphäre erreicht werden. Auch bei Lagerungen in Wasser (Meerwasser, Leitungswasser, entsalzenes Wasser) bei erhöhten Temperaturen (> 50 °C) kann dieser Effekt beobachtet werden.

Ist eine Änderung der finalen Bauteileigenschaften unerwünscht oder eine feuchtwärme Alterung nicht möglich, so wird bevorzugt mit einem Äquivalenzverhältnissen von Polyisocyanaten zu Polyepoxiden von größer 5:1, bevorzugt größer 7,5:1 und besonders bevorzugt größer 10:1 gearbeitet.

Demgemäß betrifft die vorliegende Erfindung gemäß einer weiteren Ausführungsform ein Verfahren zur Herstellung eines Harzes wie zuvor beschrieben, wobei das bei der Umsetzung erhaltene ausreagierte Harz nach der Umsetzung feucht gelagert wird.

Die vorliegende Erfindung betrifft auch die Verwendung einer metallfreien Lewisbase mit mindestens einem Stickstoffatom als Katalysator für das Mischen mindestens eines Polyisocyanats mit mindestens einem Polyepoxid. Insbesondere betrifft die vorliegende Erfindung die Verwendung von 1,8-Diazabicyclo-5,4,0-undec-7-en und Derivaten davon als Katalysator für die Umsetzung mindestens eines Polyisocyanats mit mindestens einem Polyepoxid, weiter bevorzugt die Verwendung von 1,8-Diazabicyclo-5,4,0-undec-7-en und Derivaten davon als Katalysator für die Umsetzung von Bisphenol-A Epoxiden und Derivaten davon mit mindestens einem Polyisocyanat.

Weiter betrifft die vorliegende Erfindung auch Harze erhältlich nach einem erfindungsgemäßen Verfahren sowie Formkörper erhältlich aus derartigen Harzen.

Gemäß einem weiteren Aspekt betrifft die vorliegende Erfindung demnach ein Harz erhältlich durch Umsetzung mindestens eines Polyisocyanats mit mindestens einem Polyepoxid, wobei die Umsetzung in Gegenwart eines Katalysatorsystems auf der Basis mindestens einer metallfreien Lewisbase mit mindestens einem Stickstoffatom wie zuvor beschrieben stattfindet,
wobei das Katalysatorsystem in einer Menge von 0,001 bis 1 Gew.-% bezogen auf die Summe des eingesetzten Polyisocyanats und Polyepoxids eingesetzt wird, und
wobei das Verfahren mindestens die folgenden Schritte umfasst:
(i) Mischen des mindestens einen Polyisocyanats, des mindestens einen Polyepoxids und des Katalysatorsystems unter Erhalt einer Mischung (I);
(ii) Ausbringen der Mischung (I) in eine Form oder an den gewünschten Reaktionsort durch Gießen, Sprühen oder Verteilen;
(iii) Erwärmen der Mischung (I) auf eine Temperatur im Bereich von 70 bis 100 °C bis zur Aushärtung der Mischung.

Geeignete Polyepoxide, Polyisocyanate und Katalysatorsystem sind zuvor beschrieben.

So betrifft die vorliegende Erfindung gemäß einer weiteren Ausführungsform ein Harz wie zuvor beschrieben, wobei das mindestens eine Polyepoxid ausgewählt ist aus der Gruppe bestehend aus Bisphenol-A Epoxiden, Derivaten davon und aliphatischen Di- oder Tri-Epoxiden.

Bevorzugt betrifft die vorliegende Erfindung gemäß einer weiteren Ausführungsform ein Harz wie zuvor beschrieben, wobei das mindestens eine Polyisocyanat ausgewählt ist aus der Gruppe bestehend aus aromatischen, araliphatischen und aliphatischen Polyisocyanaten.

Bevorzugt werden als Polyisocyanate Prepolymere eingesetzt. Durch die Variation des Isocyanatanteils im Prepolymeren können zusätzliche Eigenschaften wie z.B. Härte eingestellt werden, falls keine weiteren Zusatzstoffe wie z.B. Weichmacher verwendet werden.

Als Einsatzgebiet für die erfindungsgemäßen Harze kommen neben den üblichen Polyurethanharzanwendungen wie Coatings, Laminieren, Dichtungen und Herstellung von Formteilen besonders Anwendungen in Betracht, bei denen sehr großflächige Bauteile, wie Rotorblätter für Windkraftanlagen, Bootsrümpfe oder Kunststoffkarosserien für Automobile hergestellt werden. Als Verarbeitungsverfahren werden hier besonders die Vakuuminfusion und die Druckinfusion angewendet.

Weitere Anwendungen liegen im Bereich Automobil, Bautenschutz, Betonbeschichtung, Fernwärme, Maschinenbau und maritimen Anwendungen denkbar. Gemäß einem weiteren Aspekt betrifft die vorliegende Erfindung auch die Verwendung eines Harzes erhältlich nach einem erfindungsgemäßen Verfahren wie zuvor beschrieben oder eines erfindungsgemäßen Harzes wie zuvor beschrieben zur Herstellung von Dichtungen, zur Herstellung von Bauteilen für Rotorblätter, Bootsrümpfe oder Karosserieteilen oder für Beschichtungen.

Weitere Ausführungsformen der vorliegenden Erfindung sind den Ansprüchen und den Beispielen zu entnehmen. Es versteht sich, dass die vorstehend genannten und die nachstehend erläuterten Merkmale des erfindungsgemäßen Gegenstandes/Verfahren/Verwendungen nicht nur in der jeweils angegebenen Kombination, sondern auch in anderen Kombinationen verwendbar sind, ohne den Rahmen der Erfindung zu verlassen. So ist z.B. auch die Kombination von einem bevorzugten Merkmal mit einem besonders bevorzugten Merkmal, oder eines nicht weiter charakterisierten Merkmals mit einem besonders bevorzugten Merkmal etc. implizit umfasst auch wenn diese Kombination nicht ausdrücklich erwähnt wird.

Die nachfolgenden Beispiele dienen der Veranschaulichung der Erfindung, sind aber in keiner Weise einschränkend hinsichtlich des Gegenstands der vorliegenden Erfindung.

### BEISPIELE

Folgende Einsatzstoffe wurden eingesetzt:
- ISO 1:: Lupranat® M 20 der BASF Polyurethanes GmbH, Polymer-MDI mit einem NCO-Gehalt 31,5 %
- ISO 2:: Prepolymer ISO 137/28 der Firma BASF Polyurethane GmbH auf Basis von 4,4'-MDI, carbodiimid modifiziertem MDI und Polypropylenglyenglycol mit einem NCO-Gehalt von 18 %
- ISO 3:: Lupranat® MP 102 der BASF Polyurethanes GmbH, Prepolymer auf Basis von 4,4'-MDI mit einem NCO-Gehalt von 22,9 %
- ISO 4:: Prepolymer ISO 136/144 der BASF Polyurethanes GmbH mit einem NCO-Gehalt von 10 %
- Epoxid:: Baxxores® ER 5400 der BASF, Epoxidmischung auf Basis von Bisphenol-A-Epoxiden und Reaktivverdünnern mit einem EEW von 172 g/eq
- Kat 1:: Triethylendiamine, 33%ig gelöst in Propylenglycol
- Kat 2:: 1,8-Diazabicyclo-5,4,0-undecen-7 (DBU)
- Kat 3:: Polycat® 9 der Firma Airproducts (Bis(3-dimethylaminopropyl)-n,n-dimethylpropanediamine)
- Kat 4:: N-(3-(Dimethylamino)propyl)-N,N',N'-trimethylpropan-1,3-diamin
- Kat 5:: Thorcat 535
- Kat 6:: Addocat® PP der Firma Rhein Chemie
- Kat 7:: Phenol blockiertes 1,8-Diazabicyclo-5,4,0-undecen-7
- WM:: Weichmacher Citrofol® B1 der Fa. Jungbunzlauer

### 1. Beispiele V1 bis V8 und B1 und B2

Zunächst wurde eine Mischung aus Polyepoxid und Katalysator hergestellt und anschließend die Isocyanatkomponente beigefügt und erneut gemischt. Alle Komponenten hatten eine Temperatur von 25 °C. Die Zusammensetzung der Komponenten kann der Tabelle 1 entnommen werden. Die offene Zeit wurde mittels eines SHYODU Gel Timer bei Raumtemperatur bestimmt. Falls das Material sich nach 60 Minuten noch nicht verfestigt hatte, wurde die Bestimmung der offenen Zeit mittels SHYDU Gel Timer abgebrochen und die Aushärtung visuell beurteilt. War das Material noch fließfähig, so war der Gelpunkt noch nicht erreicht. Parallel wurden die entsprechenden Mischungen für 60 Minuten bei 80 °C getempert / gehärtet, um zu sehen, ob die Materialien sich verfestigen. Dabei sind die mit V gekennzeichneten Beispiele Vergleichsbeispiele.

**Tabelle 1**

| | V1 | V2 | V3 | V4 | V5 | V6 | V7* | V8 | B1 | B2 |
|---|---|---|---|---|---|---|---|---|---|---|
| Epoxid | 99,85g | 99,85g | 99,85g | 99,85g | 99,85g | 99,85g | | 99,85g | 99,85g | 99,85g |
| ISO 1 | 77,4g | 77,4g | 77,4g | 77,4g | 77,4g | | 77,4g | 77,4g | 77,4g | 77,4g |
| Kat 1 | 0,15g | | | | | | | | | |
| Kat 2 | | | | | | 0,15g | 0,15g | | 0,15g | |
| Kat 3 | | 0,15g | | | | | | | | |
| Kat 4 | | | 0,15g | | | | | | | |
| Kat 5 | | | | 0,15g | | | | | | |
| Kat 6 | | | | | 0,15g | | | | | |
| Kat 7 | | | | | | | | | | 0,15g |
| | | | | | | | | | | |
| Offene Zeit bei RT | 5 min (fest) | 15 min (fest) | 12 min (fest) | >24h flüssig | 25 min (fest) | >24h flüssig | >24h flüssig | > 24h flüssig | >24h flüssig | >24h flüssig |
| Aussehen nach 60 min bei 80 °C | Fest | Fest | Fest | Flüssig | Fest | Flüssig | Flüssig | Flüssig | fest | Fest |

| | | | | | | | | | | |
|---|---|---|---|---|---|---|---|---|---|---|
| * Katalysator ist mit Isocyanat Komponente unverträglich, Trübung der Mischung & Entstehung eines Niederschlags | | | | | | | | | | |

Überraschender Weise wurde gefunden, dass Mischungen von Epoxiden und Isocyanaten in Kombination mit 1,8-Diazabicyclo-5,4,0-undecen-7 bei Raumtemperatur extrem lange flüssig bleiben und dann schnell bei einer moderaten Temperatur zu einer fest Masse ausreagieren. Andere Aminkatalysatoren zeigen das typische Verhalten, welches aus dem Stand der Technik bekannt ist. Ferner zeigen die Versuche, dass ein solches Verhalten nicht mit Metallkatalysatoren erhalten werden kann. Die Verwendung von Metallkatalysatoren wie Thorcat 535 führt zu keiner Aushärtung der Mischung aus Epoxid und Isocyanat.

### 2. Beispiele V9 bis V10 und B3 bis B9

Da das Verhältnis von Polyisocyanat und Polyepoxid in Kombination mit einer spezifischen Konzentration von 1,8-Diazabicyclo-5,4,0-undecen-7 für die Erfindung wesentlich ist, soll dieser Zusammenhang mit den nachfolgenden Versuchen verdeutlicht werden. Die Bestimmung der offenen Zeit bei Raumtemperatur erfolgte in diesem Falle visuell. Als Grenzwert wurden in diesen Versuchen eine offene Zeit von größer 120 Minuten bei Raumtemperatur angestrebt und die Prüfung nach erreichen der Zeit abgebrochen. Parallel wurden die entsprechenden Mischungen im Ofen bei 90 °C für 120 Minuten ausreagiert. Wie auch in den vorangegangen Versuchen wurden zunächst Polyepoxid mit Katalysator 2 vorgemischt. Teile dieser Mischung wurden dann mit dem Polyisocyanat gemischt. Tabelle 2 gibt die Mengenanteile der Reaktionsmischungen, den Anteil an Katalysator, bezogen auf die Mischung von Polyepoxiden, Polyisocyanaten und Katalysator und das Äquivalenzverhältnis von Polyisocyanat zu Polyepoxid wieder.

**Tabelle 2**

| | V9 | V10 | B3 | B4 | B5 | B6 | B7 | B8 | B9 |
|---|---|---|---|---|---|---|---|---|---|
| Epoxid | 95g | 49,375 | 50,3g | 49,7g | 4,9375g | 1,08625g | 0,49g | 0,147g | 79,0g |
| Kat 2 | 5g | 0,625 | 0,1g | 0,3g | 0,0625g | 0,01375g | 0,01g | 0,003 | 1,0g |
| ISO 3 | 25g | 10g | 12,4g | 29,6g | 49,2g | 49,6 | 49,5 | 49,5 | |
| ISO 4 | | | | | | | | | 200 |
| | | | | | | | | | |
| %-Kat | 4 | 1,04 | 0,16 | 0,38 | 0,11 | 0,027 | 0,02 | 0,006 | 0,36 |
| VH | 0,25:1 | 0,19:1 | 0,23:1 | 0,56:1 | 9,33:1 | 42,77:1 | 94,52:1 | 315:1 | 1:1 |
| Offene Zeit bei RT | <1 min (fest) | 30 min (fest) | >120 Minuten flüssig | >120 Minuten flüssig | >120 Minuten (flüssig) | >120 Minuten flüssig | >120 Minuten flüssig | > 120 Minuten flüssig | >120 Minuten flüssig |
| Aussehen nach 120 min bei 90°C | Fest | Fest | Fest | Fest | Fest | Fest | Fest | Fest | Fest |

| | | | | | | | | | |
|---|---|---|---|---|---|---|---|---|---|
| %-Kat bedeutet der Anteil an Katalysator bezogen auf die Mischung aus Katalysator, Polyisocyanat und Polyepoxid; VH beschreibt das Äquivalenzverhältnis von Isocyanat: Epoxid in der Mischung von Polyisocyanat und Polyepoxid. | | | | | | | | | |

### 3. Beispiele V11 und B10

Da V7 zeigte, dass reines DBU eine Unverträglichkeit mit dem Polyisocyanat aufweist, soll in den nachfolgenden Versuchen gezeigt werden, dass für die Aushärtung die erfindungsgemäße Mischung aus Polyisocyanat, Polyepoxid und Katalysator erforderlich ist, und die Kombination aus DBU und Polyisocyanat nicht zum gewünschten Ergebnis führt.

Hierzu wurde eine Mischung aus einen 1g DBU in 49g Epoxid bzw. 1g DBU in 49g Weichmacher Citrofol B1 hergestellt. Jeweils 1g dieser Mischung wurde dann mit 49g Iso 3 vermischt und die offene Zeit und die Aushärtung analog zu den vorangegangen Versuchen durchgeführt. Tabelle gibt einen Aufschluss über die Ergebnisse. Die Mischung aus V11 war klar und kein Niederschlag zu beobachten

**Tabelle 3**

| | V11 | B10 |
|---|---|---|
| Epoxid | | 0,98g |
| WM | 0,98g | |
| Kat 2 | 0,02g | 0,02g |
| ISO 3 | 49,0g | 49,0g |
| %-Kat | 0,04 | 0,04 |
| VH | - | 46,8:1 |
| Offene Zeit bei RT | >120 Minuten (flüssig) | >120 Minuten (flüssig) |
| Aussehen nach 120 min bei 90°C | flüssig | Fest |

### 4. Beispiele B11 und B12

Um zu zeigen, dass die Erfindungsgemäßen Mischungen aus Polyisocyanat, Polyepoxid und Katalysator auch hervorragende mechanische Eigenschaften aufweisen, wurden die Versuche B11 und B12 durchgeführt. Hierzu wurden die Komponenten gemischt und entgast (über einen Vakuumspeedmixer). Aus der erhaltenen Mischung wurden Prüfplatten mit 2 mm Dicke hergestellt. Die Aushärtung erfolgte bei 95 °C für 2 Stunden. Danach wurden die Materialien 7 Tage unter Normklima gelagert, bevor die mechanischen Eigenschaften bestimmt wurden. Die feuchtwärme Alterung erfolgte in einem Druckbehälter bei 130 °C in Wasserdampfatmosphäre für 5, 10 oder 15 Stunden. Danach wurden die Probenkörper entnommen, getrocknet und 24 Stunden unter Normklima konditioniert, bevor die mechanischen Eigenschaften bestimmt wurden.

Tabelle 4 liefert Aufschluss über die mechanischen Eigenschaften vor und nach der Alterung.

**Tabelle 4**

| | **B11** | **B12** |
|---|---|---|
| Epoxid | 99,7g | 99,7g |
| Kat 2 | 0,3g | 0,3g |
| | | |
| ISO 2 | 135,4g | 270,8g |
| | | |

| **Mechanische Eigenschaften** | | |
|---|---|---|
| | | |

| ***Original*** | | |
|---|---|---|
| Reißfestigkeit [Mpa] | 17,4 | 30,1 |
| Dehnung @ Bruch [%] | 26 | 13 |
| E-Modul [MPa] | 266 | 913,6 |

| ***Hydrolyse*** | | |
|---|---|---|
| ***5 h @ 130°C*** | | |
| Reißfestigkeit [Mpa] | 41,6 | 41,4 |
| Dehnung @ Bruch [%] | 7 | 10 |
| E-Modul [MPa] | 1211 | 1055 |

| ***10 h @ 130°C*** | | |
|---|---|---|
| Reißfestigkeit [Mpa] | 46,6 | 41,7 |
| Dehnung @ Bruch [%] | 8 | 8 |
| E-Modul [MPa] | 1425 | 1012 |

| ***15h @ 130°C*** | | |
|---|---|---|
| Reißfestigkeit [Mpa] | 49,1 | 42,6 |
| Dehnung @ Bruch [%] | 11 | 8 |
| E-Modul [MPa] | 1405 | 870 |

Wie aus den Beispielen ersichtlich ist, zeigen die erfindungsgemäßen Mischungen aus Polyisocyanaten, Polyepoxiden und Katalysator hervorragende mechanische Eigenschaften. Ferner können je nach Äquivalenzverhältnis von Polyisocyanat zu Polyepoxid die mechanischen Eigenschaften der Produkte durch eine feuchtwärme Lagerung noch verbessert werden.

## Patentansprüche

1. Verfahren zur Herstellung eines Harzes umfassend das Mischen mindestens eines Polyisocyanats mit mindestens einem Polyepoxid, wobei das Mischen in Gegenwart eines Katalysatorsystems auf der Basis mindestens einer metallfreien Lewisbase mit mindestens einem Stickstoffatom ausgewählt aus der Gruppe bestehend aus 1,8-Diazabicyclo-5,4,0-undec-7-en und Derivaten davon stattfindet,
wobei das Katalysatorsystem in einer Menge von 0,001 bis 1 Gew.-% bezogen auf die Summe des eingesetzten Polyisocyanats und Polyepoxids eingesetzt wird, und
wobei das Verfahren mindestens die folgenden Schritte umfasst:
(i) Mischen des mindestens einen Polyisocyanats, des mindestens einen Polyepoxids und des Katalysatorsystems unter Erhalt einer Mischung (I);
(ii) Ausbringen der Mischung (I) in eine Form oder an den gewünschten Reaktionsort durch Gießen, Sprühen oder Verteilen;
(iii) Erwärmen der Mischung (I) auf eine Temperatur im Bereich von 70 bis 100 °C bis zur Aushärtung der Mischung.

2. Verfahren gemäß Anspruch 1, wobei das Katalysatorsystem in einer Menge von 0,005 bis 0,75 Gew.-% bezogen auf die Summe des eingesetzten Polyisocyanats und Polyepoxids eingesetzt wird.

3. Verfahren gemäß Anspruch 2, wobei die Mischung (I) bei einer Temperatur von 25 °C eine Gelzeit von größer 60 Minuten aufweist.

4. Verfahren gemäß einem der Ansprüche 1 bis 3, wobei das mindestens eine Polyepoxid ausgewählt ist aus der Gruppe bestehend aus Bisphenol-A-Epoxiden, Bisphenol-F-Epoxiden, Derivaten davon, aliphatischen Di- oder Tri-Epoxiden und Mischungen aus zwei oder mehr davon.

5. Verfahren gemäß einem der Ansprüche 1 bis 4, wobei bei der Umsetzung des mindestens einen Polyisocyanats mit dem mindestens einen Polyepoxid keine gegenüber Isocyanaten reaktiven Verbindungen außer Epoxiden eingesetzt werden.

6. Verfahren gemäß einem der Ansprüche 1 bis 5, wobei das mindestens eine Polyisocyanat ausgewählt ist aus der Gruppe bestehend aus aromatischen, araliphatischen und aliphatischen Polyisocyanaten.

7. Verfahren gemäß einem der Ansprüche 1 bis 6, wobei das mindestens eine Polyisocyanat ein Prepolymer mit einem NCO-Gehalt von 2 bis 30 % ist.

8. Verfahren gemäß einem der Ansprüche 1 bis 7, wobei das Äquivalenzverhältnis von dem mindestens einen Polyisocyanat zu dem mindestens einen Polyepoxid im Bereich von 0,25:1 bis 5000:1 liegt.

9. Verfahren gemäß einem der Ansprüche 1 bis 8, wobei bei der Umsetzung des mindestens einen Polyisocyanats mit dem mindestens einen Polyepoxid keine wasserstoffaziden Verbindungen zugesetzt werden.

10. Harz, erhältlich oder erhalten durch das Mischen mindestens eines Polyisocyanats mit mindestens einem Polyepoxid, wobei das Mischen in Gegenwart eines Katalysatorsystems auf der Basis mindestens einer metallfreien Lewisbase mit mindestens einem Stickstoffatom ausgewählt aus der Gruppe bestehend aus 1,8-Diazabicyclo-5,4,0-undec-7-en und Derivaten davon stattfindet,
wobei das Katalysatorsystem in einer Menge von 0,001 bis 1 Gew.-% bezogen auf die Summe des eingesetzten Polyisocyanats und Polyepoxids eingesetzt wird, und
wobei das Verfahren mindestens die folgenden Schritte umfasst:
(i) Mischen des mindestens einen Polyisocyanats, des mindestens einen Polyepoxids und des Katalysatorsystems unter Erhalt einer Mischung (I);
(ii) Ausbringen der Mischung (I) in eine Form oder an den gewünschten Reaktionsort durch Gießen, Sprühen oder Verteilen;
(iii) Erwärmen der Mischung (I) auf eine Temperatur im Bereich von 70 bis 100 °C bis zur Aushärtung der Mischung.

11. Harz gemäß Anspruch 10, wobei das Katalysatorsystem in einer Menge von 0,01 bis 1 Gew.-% bezogen auf die Summe des eingesetzten Polyisocyanats und Polyepoxids eingesetzt wird.

12. Harz gemäß Anspruch 10 oder 11, wobei das mindestens eine Polyepoxid ausgewählt ist aus der Gruppe bestehend aus Bisphenol-A-Epoxiden, Bisphenol-F-Epoxiden, Derivaten davon, aliphatischen Di- oder Tri-Epoxiden und Mischungen aus zwei oder mehr davon.

13. Harz gemäß einem der Ansprüche 10 bis 12, wobei das mindestens eine Polyisocyanat ausgewählt ist aus der Gruppe bestehend aus aromatischen, araliphatischen und aliphatischen Polyisocyanaten.

14. Verwendung eines Harzes erhältlich oder erhalten nach einem Verfahren gemäß einem der Ansprüche 1 bis 9 oder eines Harzes gemäß einem der Ansprüche 10 bis 13 zur Herstellung von Dichtungen, zur Herstellung von Bauteilen für Rotorblätter, Bootsrümpfe oder Karosserieteilen oder für Beschichtungen.

## Claims

1. A method for producing a resin, which comprises mixing at least one polyisocyanate with at least one polyepoxide, said mixing taking place in the presence of a catalyst system based on at least one metal-free Lewis base having at least one nitrogen atom, selected from the group consisting of 1,8-diazabicyclo-5,4,0-undec-7-ene and derivatives thereof,
the catalyst system being used in an amount of 0.001 to 1 wt%, based on the sum of the polyisocyanate and polyepoxide used, and
the method comprising at least the following steps:
(i) mixing the at least one polyisocyanate, the at least one polyepoxide, and the catalyst system to obtain a mixture (I);
(ii) delivering the mixture (I) into a mold or to the desired reaction site by pouring, spraying, or distributing;
(iii) heating the mixture (I) to a temperature in the range from 70 to 100°C until the mixture is cured.

2. The method according to claim 1, the catalyst system being used in an amount of 0.005 to 0.75 wt%, based on the sum of the polyisoryanate and polyepoxide used.

3. The method according to claim 2, the mixture (I) having a gel time of more than 60 minutes at a temperature of 25°C.

4. The method according to any of claims 1 to 3, the at least one polyepoxide being selected from the group consisting of bisphenol A epoxides, bisphenol F epoxides, derivatives thereof, aliphatic di- or tri-epoxides, and mixtures of two or more thereof.

5. The method according to any of claims 1 to 4, there being no isocyanate-reactive compounds other than epoxides used in the reaction of the at least one polyisocyanate with the at least one polyepoxide.

6. The method according to any of claims 1 to 5, the at least one polyisocyanate being selected from the group consisting of aromatic, araliphatic, and aliphatic polyisocyanates.

7. The method according to any of claims 1 to 6, the at least one polyisocyanate being a prepolymer having an NCO content of 2% to 30%.

8. The method according to any of claims 1 to 7, the equivalents ratio of the at least one polyisocyanate to the at least one polyepoxide being in the range from 0.25:1 to 5000:1.

9. The method according to any of claims 1 to 8, there being no hydrogen-acidic compounds added in the reaction of the at least one polyisocyanate with the at least one polyepoxide.

10. A resin obtainable or obtained by the mixing of at least one polyisocyanate with at least one polyepoxide, said mixing taking place in the presence of a catalyst system based on at least one metal-free Lewis base having at least one nitrogen atom, selected from the group consisting of 1,8-diazabicyclo-5,4,0-undec-7-ene and derivatives thereof,
the catalyst system being used in an amount of 0.001 to 1 wt%, based on the sum of the polyisocyanate and polyepoxide used, and
the method comprising at least the following steps:
(i) mixing the at least one polyisocyanate, the at least one polyepoxide, and the catalyst system to obtain a mixture (I);
(ii) delivering the mixture (I) into a mold or to the desired reaction site by pouring, spraying, or distributing;
(iii) heating the mixture (I) to a temperature in the range from 70 to 100°C until the mixture is cured.

11. The resin according to claim 10, the catalyst system being used in an amount of 0.01 to 1 wt%, based on the sum of the polyisocyanate and polyepoxide used.

12. The resin according to claim 10 or 11, the at least one polyepoxide being selected from the group consisting of bisphenol A epoxides, bisphenol F epoxides, derivatives thereof, aliphatic di- or tri-epoxides, and mixtures of two or more thereof.

13. The resin according to any of claims 10 to 12, the at least one polyisocyanate being selected from the group consisting of aromatic, araliphatic, and aliphatic polyisocyanates.

14. The use of a resin obtainable or obtained by a method according to any of claims 1 to 9 or of a resin according to any of claims 10 to 13 for producing seals, for producing components for rotor blades, boat hulls, or vehicle body parts, or for coatings.

## Revendications

1. Procédé de fabrication d'une résine comprenant le mélange d'au moins un polyisocyanate avec au moins un polyépoxyde, le mélange ayant lieu en présence d'un système catalytique à base d'au moins une base de Lewis sans métal contenant au moins un atome d'azote, choisie dans le groupe constitué par le 1,8-diazabicyclo-5,4,0-undéc-7-ène et ses dérivés, le système catalytique étant utilisé en une quantité de 0,001 à 1 % en poids, par rapport à la somme du polyisocyanate et du polyépoxyde utilisés, et
le procédé comprenant au moins les étapes suivantes :
(i) le mélange dudit au moins un polyisocyanate, dudit au moins un polyépoxyde et du système catalytique pour obtenir un mélange (I) ;
(ii) l'application du mélange (I) dans un moule ou à l'emplacement de réaction souhaité par coulée, pulvérisation ou répartition ;
(iii) le chauffage du mélange (I) à une température dans la plage allant de 70 à 100 °C jusqu'au durcissement du mélange.

2. Procédé selon la revendication 1, dans lequel le système catalytique est utilisé en une quantité de 0,005 à 0,75 % en poids, par rapport à la somme du polyisocyanate et du polyépoxyde utilisés.

3. Procédé selon la revendication 2, dans lequel le mélange (I) présente à une température de 25 °C un temps de gélification supérieur à 60 minutes.

4. Procédé selon l'une quelconque des revendications 1 à 3, dans lequel ledit au moins un polyépoxyde est choisi dans le groupe constitué par les époxydes de bisphénol A, les époxydes de bisphénol F, leurs dérivés, les di- ou tri-époxydes aliphatiques et les mélanges de deux ou plus d'entre eux.

5. Procédé selon l'une quelconque des revendications 1 à 4, dans lequel aucun composé réactif avec les isocyanates autre que des époxydes n'est utilisé lors de la réaction dudit au moins un polyisocyanate avec ledit au moins un polyépoxyde.

6. Procédé selon l'une quelconque des revendications 1 à 5, dans lequel ledit au moins un polyisocyanate est choisi dans le groupe constitué par les polyisocyanates aromatiques, araliphatiques et aliphatiques.

7. Procédé selon l'une quelconque des revendications 1 à 6, dans lequel ledit au moins un polyisocyanate est un prépolymère ayant une teneur en NCO de 2 à 30 %.

8. Procédé selon l'une quelconque des revendications 1 à 7, dans lequel le rapport équivalent entre ledit au moins un polyisocyanate et ledit au moins un polyépoxyde se situe dans la plage allant de 0,25:1 à 5 000:1.

9. Procédé selon l'une quelconque des revendications 1 à 8, dans lequel aucun composé d'azoture d'hydrogène n'est ajouté lors de la réaction dudit au moins un polyisocyanate avec ledit au moins un polyépoxyde.

10. Résine, pouvant être obtenue ou étant obtenue par mélange d'au moins un polyisocyanate avec au moins un polyépoxyde, le mélange ayant lieu en présence d'un système catalytique à base d'au moins une base de Lewis sans métal contenant au moins un atome d'azote, choisie dans le groupe constitué par le 1,8-diazabicyclo-5,4,0-undéc-7-ène et ses dérivés, le système catalytique étant utilisé en une quantité de 0,001 à 1 % en poids, par rapport à la somme du polyisocyanate et du polyépoxyde utilisés, et
le procédé comprenant au moins les étapes suivantes :
(i) le mélange dudit au moins un polyisocyanate, dudit au moins un polyépoxyde et du système catalytique pour obtenir un mélange (I) ;
(ii) l'application du mélange (I) dans un moule ou à l'emplacement de réaction souhaité par coulée, pulvérisation ou répartition ;
(iii) le chauffage du mélange (I) à une température dans la plage allant de 70 à 100 °C jusqu'au durcissement du mélange.

11. Résine selon la revendication 10, dans laquelle le système catalytique est utilisé en une quantité de 0,01 à 1 % en poids, par rapport à la somme du polyisocyanate et du polyépoxyde utilisés.

12. Résine selon la revendication 10 ou 11, dans laquelle ledit au moins un polyépoxyde est choisi dans le groupe constitué par les époxydes de bisphénol A, les époxydes de bisphénol F, leurs dérivés, les di- ou tri-époxydes aliphatiques et les mélanges de deux ou plus d'entre eux.

13. Résine selon l'une quelconque des revendications 10 à 12, dans laquelle ledit au moins un polyisocyanate est choisi dans le groupe constitué par les polyisocyanates aromatiques, araliphatiques et aliphatiques.

14. Utilisation d'une résine pouvant être obtenue ou étant obtenue par un procédé selon l'une quelconque des revendications 1 à 9 ou d'une résine selon l'une quelconque des revendications 10 à 13 pour la fabrication de joints d'étanchéité, pour la fabrication de composants pour pales de rotors, coques d'embarcation ou parties de carrosserie ou pour des revêtements.
